# EUROPEAN PATENT APPLICATION

(11) **EP 0 611 588 A1**
(43) Date of publication of application: **24.08.1994**
(21) Application number: 94301110.6
(22) Date of filing: 16.02.1994
(51) Int. Cl.: B01D 1/04, C13G 1/00, C13G 1/04, F28F 1/12, F28F 9/26, F28F 9/00, F28G 13/00

(54) **Method for heating a sugar solution**

(30) Priority: 19.02.1993 GB 9303355
(71) Applicant: Yorkshire Process Plant Limited, Brighouse West Yorkshire HD6 1ED (GB)
(72) Inventor: Paget, Anthony John, Brighouse, West Yorkshire, HD6 4LB (GB)
(74) Representative: Brandon, Paul Laurence

(57) **Abstract**

A method for heating a sugar solution, characterised in that the solution is caused to flow along a tubular passage (66) surrounding a heated central tube (64), the tubular passage (66) being surrounded by an outer tube (24), the flow is forced around a plurality of diverters (70) which extend substantially across the passage (66), each of which diverters (70) deflects the solution from the major flowpath determined by the tubular passage (66), to induce eddies or small cross-currents in the solution flow, thereby to enhance the mixing of the solution and/or the heat transfer to the solution.

## Description

The present invention relates to methods for heating a sugar solution and to heat exchangers for heating a sugar solution.

In the preparation of sugar confectionery, such as fondants, soft centres for confections (candies), boiled sweets, creams, caramels, fudge, jellies, gums, pastilles and crystallised confectionery, it is known to pass a solution, which may be liquid or semi-liquid sugar, or sugar and glucose and/or invert sugar and/or gelling agent such as starch, gelatine or pectin (all of which are included within the term "sugar" in this specification), through a heat exchanger to cook the sugar or sugar mix.

According to a first aspect of this invention there is provided a method for heating a sugar solution, characterised in that the solution is caused to flow along a tubular passage surrounding a heated central tube, the tubular passage being surrounded by an outer tube, the flow is forced around a plurality of diverters which extend substantially across the passage, each of which diverters deflects the solution from the major flow path determined by the tubular passage, to induce eddies or small cross-currents in the solution flow, thereby to enhance the mixing of the solution and/or the heat transfer to the solution.

This arrangement can provide a generally annular cross-section passage for the solution, with heat being supplied to the solution inwardly from the outer tube if heated and outwardly from the central tube. In the preferred construction, the passage comprises an outer tube, concentric with the central tube.

According to a second aspect of this invention, there is provided a heat exchanger for the heating of sugar solution, characterised in that the heat exchanger comprises a tubular passage for the solution to flow through and a heated central tube extending along the inside of the flow passage, so that the flow passage surrounds the central tube, and an outer tube surrounding the flow passage, there being a plurality of diverters in the flow passage, which diverters extend substantially across the passage and are arranged to divert the solution in its flow through the passage from the major flow path determined by the flow passage.

Preferably the diverters are attached to the central tube. It is further preferred that each diverter comprises a fin extending longitudinally of the passage and a lip bent outwardly from the fin. The lip may be curved away from the fin, and in the preferred construction, its convex side faces into the solution stream. Alternatively, the concave side of the lip may face into the solution stream. The lip may have a quite small outward projection from the fin (of the order of the thickness of the fin itself), since it has been found that a plurality of relatively small diversions in the solution flow are effective to set up eddies which significantly improve the heat transfer effect, and also assist in the mixing process.

It is further preferred that the radial depth of each diverter is substantially equal to the radial dimension of the annular passage, so that each diverter extends radially across the full depth of the passage.

According to a preferred feature, both the central and outer tubes are straight; the central tube extends out through a seal at one end of the outer tube, so that it is possible to withdraw the central tube from the outer tube by sliding it out through the end of the outer tube, to permit inspection and/or cleaning of the external surface of the central tube and the internal surface of the outer tube. This allows for easy inspection and cleaning of the surfaces, which are engaged by the sugar solution.

The present invention will now be described by way of example only, with reference to the accompanying drawings, in which:-
Figure 1 is a sectional arrangement of the main part of the cooker,
Figure 2 is an end elevation of the arrangement shown in Figure 1,
Figure 3 is a detail view to a larger scale of one end of a flow passage arrangement,
Figure 4 is a perspective detail view of part of a central tube showing diverters, and
Figure 5 is a diagram illustrating a temperature control arrangement.

The cooker herein described may be used in the production of a wide variety of sugar confections such as boiled sweets (candies); soft centres for chocolates; fondants; cream or crystallised confections, and it is to be understood that it is not limited to any particular type of confectionery manufacture. Typically, it may be fed with a sugar/glucose solution, such as would be obtained from a Theegarten dissolver, but it is adapted to deal with any kind of sugar solution which is sufficiently viscous to allow it to be pumped.

A continuous sugar solution cooker essentially comprises a heat exchanger and this is true of the presently described cooker, in which the primary fluid is steam and the secondary fluid is the sugar solution, so that during the passage of the solution through the heat exchanger, the heat for cooking is supplied from the steam.

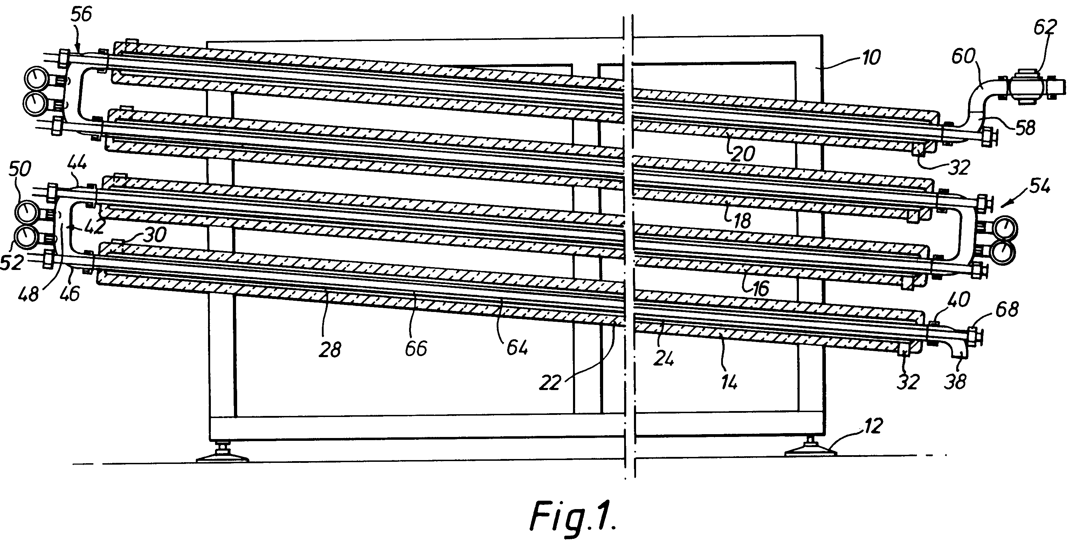

A fabricated steel frame 10, having feet 12, is in one particular example, approximately 1,370 mm high, and 2,200 mm long. This frame provides the support structure for a stack of four straight tubular steam jackets 14, 16, 18 and 20 which, as clearly shown in Figure 1, are in a parallel and inclined arrangement. Each of the steam jackets 14, 16, 18 and 20 provides a major constituent in a heat exchanger, used for cooking the sugar solution. The internal construction of each of these four steam jackets will now be more particularly described.

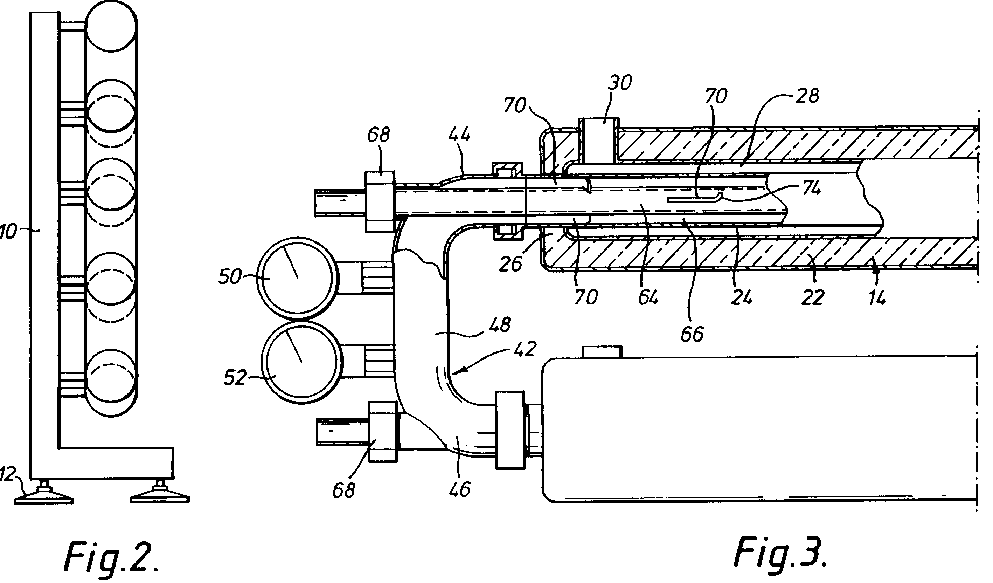

Each jacket comprises a stainless steel hollow cross-section tube, the annular cross-section of which is filled with a ceramic heat insulation material 22. A straight stainless steel outer tube 24, which is a thin walled tube, extends through the length of the jacket 14, 16, 18 or 20, and projects slightly beyond each end of the jacket. At each end, the jacket has an inturned portion 26 (see particularly Figure 3) and this inturned portion seals onto the outside of the thin walled outer tube 24. Thus, there is created an outer annular space 28 between the bore of the jacket 14, 16, 18 or 20 and the outside of the outer tube 24. A steam inlet fitting 30 is provided in the wall of the jacket 14 adjacent to its lefthand end, for the reception of a steam inlet gland (not shown).

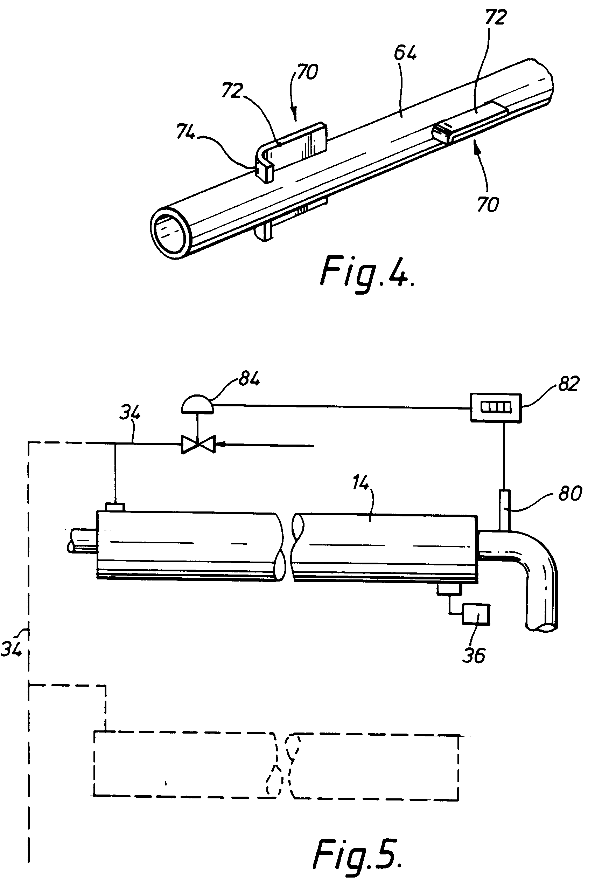

Similarly, a steam outlet fitting 32 is provided in the wall of the jacket 14, 16, 18 or 20 at the righthand, lower, end of each of the jackets. Various steam arrangements are possible, but in the particular example which is being described, the four inlets 30 are connected to a steam inlet pipe, illustrated diagrammatically at 34 in Figure 5, and each of the outlets 32 connects directly to a steam trap, indicated diagrammatically at 36 in Figure 5. It would, however, be possible to connect all the outlets 32 to a single steam trap.

An elbow fitting 38 is attached by a gland 40 to the righthand lower end of the outer tube 24 in the lower jacket 14, and this elbow fitting 38 provides an inlet to the heat exchanger from a sugar solution supply (not shown) which includes a power-operated pump for forcing the sugar solution through the heat exchanger.

At the lefthand end of the heat exchanger, there is a U-bend 42, which connects the lefthand ends of the outer tubes 24 in the jackets 14 and 16. In fact, the U-bend 42 takes the form of upper and lower elbows 44 and 46, each of which is similar to the elbow 38 and each of which has a gland-type connection with the end of the outer tube 24, these two elbows 44 and 46 being connected together by a short, straight tubular portion 48, to which there are attached pressure and temperature gauges 50 and 52.

A similar U-bend arrangement 54 attaches to the righthand end of the outer tubes 24 in the jackets 16 and 18, and another similar U-bend arrangement 56 attaches to the lefthand ends of the outer tubes 24 in the jackets 18 and 20. Finally, an elbow 58 similar to the elbow 38 is attached to the righthand end of the outer tube 24 projecting from the top jacket 20, and this is connected by a second elbow 60 to a solution flow valve 62. There is thus created a sugar solution flow path from the inlet 38 out through the flow control valve 62, which is generally sinuous, and travels in series through each of the outer tubes 24 in the jackets 14, 16, 18 and 20. This flowpath is similar to that of the steam tubes or water tubes in a super heater or economiser of a high efficiency boiler.

A thin walled stainless steel central tube 64 extends through each of the outer tubes 24 and is concentric therewith, so that an annular space 66 is formed between the outside of the central tube 64 and the bore of the outer tube 24. In practice, it is this annular space which forms the flow passage for the sugar solution. Each of the central tubes 64 is straight, and extends through the length of the outer tube 24, and through the elbow 38, 44, 46 or 58, and out through a sealing gland 68 forming part of the elbow. Beyond the extremities of the heat exchanger arrangement, the central tubes 64 are connected to inlet and outlet manifolds of a high temperature steam supply not shown. It is to be noted, however, that the glands 68 effectively attach the central tubes 64 to the U-bends 42 and to the elbows 38 and 58.

It will be appreciated that the annular space 66 through which the sugar solution passes is quite thin, and that it is in engagement with heated surfaces comprising the bore of the outer tube 24 and the outside of the central tube 64. Consequently, there is a high efficiency heat transfer provision between the steam supplied as the primary fluid to the jackets 14, 16, 18 and 20 and to the central tubes 64, and the sugar solution which forms the secondary fluid of the heat exchanger. As the sugar solution is pumped through the inlet elbow 38, then through the sinuous passage which includes the long, straight annular sections in the four outer tubes 24, and finally through the outlet elbows 58 and 60 and the fluid control valve 62, it is subjected to intense heating by the steam supplied to the jackets and to the central tubes. This is sufficient for cooking purposes. However, in order to improve still further the cooking action, and to some extent assist in the completion of the mixing process in the sugar solution, diverters 70 are provided, as illustrated in Figures 3 and 4. Each diverter 70 takes the form of a stainless steel fin 72 which is welded to the exterior of the central tube 64, and projects radially from that tube. The projection of the tube 72 is such that, as illustrated in Figure 3, it extends across the radial depth of the annular space 66, and locates on the inside of the outer tube 24. The fin 70 extends in a direction parallel to that of the central tube 64, but at one end, it has an outturned lip 74. This lip is quite short, and in fact the depth of the lip on the inside of the radius may be about equivalent to that of the thickness of the fin itself. Furthermore, it will be observed from Figures 3 and 4 that the lip presents a convex external surface, which is pointing against the direction of flow of sugar solution through the passage 66.

The diverters 70 are arranged in pairs, as is more clear from Figure 4. A first pair project radially from the central tube 64 at 0° and 180° locations, whereas the next adjacent pair project from the tube 64 at the 90° and 270° locations. The diverters 70 may be provided throughout the length of the portion of each central tubes 64 which fit within the outer tube 24, or alternatively they may only be provided in discrete areas of those tubes. The flow of the sugar solution along the passages 66 is generally laminar and, in the absence of the diverters, would be quite smooth. However, as the sugar solution encounters the convex faces of the ends of the diverters produced by the outturned lips, some of the solution is diverted in a radial direction, and as a result, an eddy current is set up in the sugar solution. Because of the offsetting arrangement of successive pairs of diverters, the eddies created by the diverters occur all round the annular passage 66, and since the diverters 70 will be at substantially the same temperature as the central tubes 64, they provide an enhanced heat transfer effect, without creating too great a resistance to flow of the sugar solution through the heat exchanger.

When it is required to clean the sugar solution passages in the heat exchanger, it is only necessary to decouple the glands 40 on the elbows 42 at the lefthand end of the heat exchanger and to release the central tubes 24 from the glands 68 on the elbows 38 and 58 and on the U-bend connecting the passages through the chamber 16 and 18 at the righthand end of the heat exchanger. The central tubes 24 thereby become totally disconnected at the righthand end of the heat exchanger, but remain attached by their glands 68 to the U-bends 42 at the lefthand end of the heat exchanger. Each of these two U-bends at the lefthand end can then be pulled outwardly, dragging its two central tubes 64 with it out of the outer tubes 24 in the jackets 14, 16, 18 and 20. The outward sliding motion of a pair of central tubes 64 with their connecting U-bend 42 is similar to the motion of a trombone instrument. However, it is possible to withdraw the central tubes 64 completely from their outer tubes 24. Once this has been done, there is open access to the exterior of the withdrawn central tubes 64 for inspection and cleaning purposes, and it is also possible to gain access for cleaning to the internal surface of the outer tubes 24, which are open at the end through which the central tubes have been withdrawn. This facility for inspection and cleaning is a particularly important advantage of the construction provided by the invention, because one of the drawbacks of any sinuous heat exchanger arrangement through which sugar solution has to pass is that it is inaccessible for cleaning purposes.

Another advantage of the arrangement shown in Figures 1 to 4 is that it lends itself to an automatic control arrangement such as that which is illustrated diagrammatically in Figure 5. For this purpose, a temperature sensor such as a pyrometer 80 is connected to the outlet formed by the elbows 58 and 60, so that it is adapted to sense the temperature of the sugar solution where it flows out of the heat exchanger. A signal from the temperature sensor 80 is passes to a digital temperature readout 82, and from there, a signal is taken to a diaphragm controlled steam valve 84. This valve 84 is located in the steam supply through the pipe 34 to the inlets 30 provided in the jackets 14, 16, 18 and 20. The arrangement is such that, if the temperature of the sugar solution tends to fall, then the valve 84 is opened to allow a greater flow of steam through the jackets of the heat exchanger, and conversely, if the temperature of the sugar solution rises, then the valve 84 is closed to restrict the flow of steam into the jackets of the heat exchanger.

Thus, the invention provides a heat exchanger for use with a sugar solution cooker, which is of relatively simple construction, but of high efficiency, and particularly easy to maintain and clean.

Whereas the above described embodiment of the invention refers to steam as the heating medium, it will be understood that other heating medium, such as thermal fluids, may be employed without departing from the scope of the invention.

## Claims

**1** A method for heating a sugar solution, characterised in that the solution is caused to flow along a tubular passage (66) surrounding a heated central tube (64), the tubular passage (66) being surrounded by an outer tube (24), the flow is forced around a plurality of diverters (70) which extend substantially across the passage (66), each of which diverters (70) deflects the solution from the major flowpath determined by the tubular passage (66), to induce eddies or small cross-currents in the solution flow, thereby to enhance the mixing of the solution and/or the heat transfer to the solution.

**2** A heat exchanger for the heating of sugar solution, characterised in that the heat exchanger comprises a tubular passage (66) for the solution to flow through, a heated central tube (64) extending along the inside of the flow passage (66), so that the flow passage (66) surrounds the central tube (64), and an outer tube (24) surrounding the flow passage (66), there being a plurality of diverters (70) in the flow passage (66), which diverters (70) extend substantially across the passage (66) and are arranged to divert the solution in its flow through the passage (66) from the major flow path determined by the flow passage (66).

**3** A heat exchanger as claimed in claim 2, further characterised in that the diverters (70) are attached to the central tube (64).

**4** A heat exchanger as claimed in claim 2 or claim 3, further characterised in that each diverter (70) comprises a fin (72) extending longitudinally of the passage (66) and a lip (74) bent outwardly from the fin (72).

**5** A heat exchanger as claimed in claim 4, further characterised in that the lip (74) has an outward projection from the fin (72) of the order of the thickness of the fin (72) itself.

**6** A heat exchanger as claimed in any one of claims 2 to 5, further characterised in that the diverters (70) are arranged in opposed pairs extending to an equal radius to provide concentric central (64) and outer (24) tubes.

**7** A heat exchanger as claimed in any one of claims 2 to 6, further characterised in that successive diverters (70) are offset radially with respect to each other.

**8** A heat exchanger as claimed in claim 7, further characterised in that there are two diverters (70) at the same longitudinal location in the passage (66), but arranged diametrically opposite one another, and two further diverters (70) arranged downstream of the first two, also arranged diametrically opposite each other, but displaced 90° around the cross-section of the passage (66) with respect to the first two diverters (70).

**9** A heat exchanger as claimed in any one of claims 2 to 8, further characterised in that the outer tube (24) comprises a jacket (14, 16, 18, 20) surrounding the passage (66), which jacket (14, 16, 18, 20) is adapted tc contain a heating fluid.

**10** A heat exchanger as claimed in any one of claims 2 to 9, further characterised in that both the central (64) and outer (24) tubes are straight, the central tube (64) extending out through a seal (68) at one end of the outer tube (24), so that it is possible to withdraw the central tube (64) from the outer tube (24) by sliding it out through the end of the outer tube (24), to permit inspection and/or cleaning of the external surface of the central tube (64) and the internal surface of the outer tube (24).
